(19) **Europäisches Patentamt**

**European Patent Office**

**Office européen des brevets**

(11) Numéro de publication : **0 318 386 B1**

(12) **FASCICULE DE BREVET EUROPEEN**

(45) Date de publication du fascicule du brevet :
**12.08.92 Bulletin 92/33**

(51) Int. Cl.⁵ : **B23K 35/32,** B23K 35/30, B23K 35/24

(21) Numéro de dépôt : **88402957.0**

(22) Date de dépôt : **24.11.88**

(54) **Procédé de brasage de pièces à base de métaux réfractaires.**

(30) Priorité : **27.11.87 FR 8716493**

(43) Date de publication de la demande :
**31.05.89 Bulletin 89/22**

(45) Mention de la délivrance du brevet :
**12.08.92 Bulletin 92/33**

(84) Etats contractants désignés :
**AT DE GB**

(56) Documents cités :
**FR-A- 1 023 708**
**FR-A- 2 573 346**
**GB-A- 646 899**
**US-A- 3 363 306**
**WELDING AND METAL FABRICATION, vol. 31, no. 2, février 1963, pages 46-52, Londres, GB; J.T.A. HARVEY et al.: "Productionscale vacuum brazing"**

(56) Documents cités :
**WELDING RESEARCH SUPPLEMENT, no. 10, octobre 1969, pages 463s-468s; R.G. GILLI-LAND et al.: "The development of brazing fillermetals for high temperature service"**
**WELDING RESEARCH SUPPLEMENT, no. 3, mars 1966, pages 135s-138s; J.T. SMITH: "Development of chromium-vanadium alloys forbrazing tungsten to molybdenum"**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Baccino, Régis**
Résidence "**Les Feuillantines**"
**F-38410 Uriage (FR)**
Inventeur : **Coing-Boyat, Gisèle**
**3, Chemin de Vinay**
**F-38360 Sassenage (FR)**
Inventeur : **Parayre, Claude**
**32, rue de Chante Grenouille**
**F-38400 Saint-Martin-D'Heres (FR)**

(74) Mandataire : **Mongrédien, André et al c/o BREVATOME 25, rue de Ponthieu F-75008 Paris (FR)**

**EP 0 318 386 B1**

## Description

L'invention a pour objet un procédé de brasage de pièces à base de métaux réfractaires, qui permet d'obtenir des joints brasés résistant à de hautes températures.

De façon plus précise, elle concerne l'assemblage de pièces à base de métaux réfractaires par brasage au four, c'est-à-dire par une technique dans laquelle on porte les pièces à assembler en totalité à la température de brasage dans une enceinte, et elle s'applique plus particulièrement au cas où la jonction brasée obtenue doit résister par la suite, lors de son utilisation, à des températures élevées, généralement supérieures à 1300°C. Ces conditions de températures se rencontrent par exemple dans le domaine des réacteurs nucléaires à hautes températures et des échangeurs de chaleur ainsi que dans le domaine spatial.

Dans un procédé de brasage, on relie deux pièces entre elles en utilisant pour la réalisation du joint entre les deux pièces un matériau de brasure tel qu'un métal, un alliage ou leurs mélanges.

Le matériau utilisé pour la brasure doit présenter les caractéristiques suivantes :

– il doit permettre la réalisation d'un joint brasé utilisable à des températures supérieures à 1300°C,

– il doit mouiller et s'écouler de façon satisfaisante sur les pièces réfractaires à assembler,

– il doit être suffisamment stable pendant les opérations de brasage et, après brasage, pendant des périodes prolongées à températures élevées sans entraîner de réactions métallurgiques néfastes avec les constituants des pièces réfractaires, et

– il doit présenter, après brasage, de bonnes propriétés mécaniques à températures élevées.

Jusqu'à présent, deux techniques ont été utilisées pour réaliser le brasage de pièces réfractaires devant résister à des températures élevées.

La première technique consiste à utiliser comme matériau de brasage, un alliage qui contient à l'origine un élément qui abaisse le point de fusion de l'alliage comme le bore, le silicium ou le phosphore, mais qui a tendance à s'éliminer partiellement du joint brasé car il peut diffuser dans les métaux réfractaires des pièces à assembler. Ainsi, en éliminant cet élément par diffusion, on augmente le point de fusion du joint brasé qui peut résister à des températures nettement supérieures à la température de brasage.

Cette technique a ainsi l'avantage de permettre la réalisation de la brasure à une température relativement basse, mais elle présente des inconvénients qui sont liés au fait que l'élément abaissant le point de fusion de l'alliage de brasage se trouve en fin d'opération à l'intérieur des pièces à base de métaux réfractaires, principalement aux joints de grains. Ceci conduit le plus souvent à une fragilisation de ces pièces et ce phénomène est particulièrement important avec les métaux réfractaires à l'état recristallisé. Aussi, cette technique ne permet pas d'obtenir un assemblage de pièces réfractaires ayant les propriétés mécaniques requises.

La deuxième technique consiste à utiliser comme matériau de brasage, des matériaux ayant un point de fusion supérieur à la température d'utilisation des pièces assemblées, comme il est décrit dans les documents Welding Journal/Welding Research Supplement, mars 1966, p. 135-s à 138-s ; octobre 1969, p. 463-s à 468-s et octobre 1978, p.287 à 294, où l'on utilise comme matériaux de brasage des alliages du type tantale-vanadium-niobium, tantale-vanadium-titane, des alliages de titane, de vanadium ou de molybdène, et du vanadium pur.

Cette deuxième technique nécessite donc l'utilisation de températures élevées pour le brasage, mais elle évite les problèmes de fragilisation du métal de base des pièces réfractaires, qui apparaissaient avec la première technique. Cependant, la nécessité de réaliser le brasage sous vide à des températures élevées conduit à d'autres inconvénients.

En effet, lors du brasage, les métaux réfractaires sont totalement recristallisés, ce qui a pour conséquence de faire chuter considérablement leurs propriétés mécaniques.

Du point de vue économique, la consommation énergétique est très importante en raison de l'emploi de températures élevées.

Du point de vue pratique, il est très difficile de trouver des fours sous vide de grandes dimensions fonctionnant à plus de 1300°C, pour réaliser le brasage de pièces de grandes dimensions.

L'invention a précisément pour objet un procédé de brasage qui permet d'éliminer les inconvénients des procédés décrits ci-dessus.

Le procédé selon l'invention de brasage de deux pièces à base de métaux réfractaires consiste :

a) - à braser les deux pièces à une température T1, sous une atmosphère de gaz inerte, au moyen d'un alliage fusible à la température T1 et comprenant au moins deux constituants C1 et C2 choisis de façon telle que :

1°)- le constituant C1 a une température de fusion F1 supérieure à T1 mais inférieure à celles des métaux réfractaires de base des pièces à assembler et est capable de s'allier au moins avec un de ces métaux réfractaires, le diagramme de phase du système formé par ce métal réfractaire et le constituant C1 correspondant à une solubilité solide et présentant un point péritectique, et

2°)- le constituant C2 de l'alliage est volatilisable à une température au moins égale à la température T1, et

b) - à soumettre les pièces brasées obtenues dans l'étape a) à un traitement thermique sous vide, à une température au moins égale à T1, pendant une durée telle que l'on obtienne l'évaporation du constituant C2 et la diffusion du métal réfractaire capable de s'allier avec le constituant C1 dans la jonction brasée.

Dans le procédé de l'invention, on utilise ainsi pour le brasage un alliage fusible à une température inférieure à la température d'utilisation des pièces brasées, et on transforme le joint brasé obtenu à partir de cet alliage en un joint résistant à une température supérieure à la température d'utilisation des pièces brasées, par un traitement thermique qui permet d'éliminer par volatilisation le constituant C2 de l'alliage de brasage et de transformer cet alliage en un alliage résistant à une température plus élevée par diffusion d'au moins l'un des métaux réfractaires de base des pièces.

Pour obtenir ce résultat, c'est-à-dire une transformation de l'alliage de brasage comprenant C1 et C2 en un alliage ayant un point de fusion très supérieur comprenant C1 et au moins l'un des métaux réfractaires de base des pièces à assembler, il est nécessaire que le diagramme de phase du système C1-métal réfractaire de base présente l'une des caractéristiques suivantes :

1°)- ce diagramme correspond à une solubilité solide ; aussi comme le constituant C1 a un point de fusion inférieur à celui du métal réfractaire, l'alliage aura une température de fusion supérieure à celle du constituant C1 seul, ou 2°)- ce diagramme de phase présente un point péritectique.

Dans ce dernier cas, on peut augmenter la température du joint brasé de façon très importante, généralement de plus de 200°C.

Aussi, selon l'invention, on choisit de préférence comme constituant C1 un métal dont le diagramme de phase avec le ou les métaux réfractaires de base présente un point péritectique.

Le procédé de l'invention présente ainsi de nombreux avantages.

En effet, on peut réaliser le brasage à une température relativement basse, par exemple à une température de 1230 à 1320°C, tout en obtenant un joint brasé résistant à des températures très supérieures, par exemple des températures supérieures à 1552°C, généralement de l'ordre de 1700°C.

Par ailleurs, le fait d'utiliser un constituant C1 dans lequel peut diffuser l'un des métaux réfractaires de base des pièces à braser, permet d'éviter une fragilisation des pièces réfractaires.

Enfin, l'élimination du constituant C2 de l'alliage de brasage par volatilisation permet aussi d'éviter la diffusion d'un élément fragilisant dans les pièces réfractaires.

Le procédé de l'invention s'applique en particulier au brasage de pièces réalisées en métaux réfractaires ou en alliage de métaux réfractaires, qui comprennent comme métal réfractaire de base un métal choisi parmi le molybdène, le tungstène, le tantale, le niobium, le rhénium et l'osmium.

Dans ce cas, on peut utiliser comme alliage de brasage un alliage de palladium (constituant C1) et d'un métal volatilisable (constituant C2) susceptible d'abaisser le point de fusion du palladium.

Le palladium est intéressant car il peut s'allier avec la plupart des métaux réfractaires, en particulier avec le molybdène, le tantale et le niobium en donnant un diagramme de phase à point péritectique, ce qui permet, par diffusion de ces métaux réfractaires dans le palladium, d'obtenir une élévation très importante de la température de fusion du joint brasé.

Avec le palladium, on peut utiliser comme constituant C2, un métal choisi parmi l'argent, l'étain et l'indium qui présentent la propriété d'être volatilisables à des températures relativement basses, et d'avoir des tensions de vapeur élevées.

A titre d'exemples d'alliages de palladium et d'argent susceptibles d'être utilisés comme alliage de brasage, on peut citer les alliages de palladium contenant 50 à 70% en atomes d'argent dont les températures de liquidus vont de 1340 à 1230°C, en particulier l'alliage de palladium contenant 60% en poids d'argent dont l'intervalle de fusion est de 1230 à 1285°C.

On peut aussi utiliser comme alliage de brasage, des alliages de palladium et d'étain, en particulier la composition eutectique palladium-étain à 21,2% en atomes d'étain, dont la température de fusion est de 1280°C, la composition eutectique palladium-étain à 30,2% en atomes d'étain dont la température de fusion est de 1215°C, ou encore des alliages de palladium-étain contenant de 38 à 42% en atomes d'étain, ce qui correspond à des températures de liquidus allant de 1100 à 1200°C.

Selon l'invention, on peut encore utiliser comme alliage de brasage des alliages de palladium et d'indium, par exemple la composition eutectique palladium-indium à 31% en atomes d'indium dont la température de fusion est de 1304°C, la composition eutectique palladium-indium à 38,5% en atomes d'indium dont la température de fusion est de 1277°C, ou des alliages palladium-indium contenant de 50 à 60% en atomes d'indium dont les températures de liquidus sont comprises entre 1150 et 1250°C.

Pour mettre en oeuvre le procédé de l'invention, on peut réaliser la première étape de brasage en utilisant l'alliage de brasage sous forme de fils ou de feuilles que l'on positionne comme pour un brasage classique, soit entre les pièces à assembler, soit à l'extérieur du joint pour un brasage par capillarité. On porte ensuite l'ensemble formé par les pièces à assembler et la brasure à la température de brasage T1 voulue qui est généralement de 1290 à 1320°C en opérant en atmosphère de gaz inerte, par exemple d'argon. Pendant cette opération, l'alliage de brasage fond et s'écoule entre les deux pièces pour former le joint et le ou les métaux réfractaires de base des pièces commencent à diffuser dans le joint.

On réalise ensuite la deuxième étape du procédé de l'invention en faisant le vide dans l'enceinte et en maintenant les pièces pendant quelques minutes à la température voulue pour obtenir la volatilisation du constituant C2 et poursuivre la diffusion du ou des métaux réfractaires de base dans le joint brasé. Généralement, on utilise un vide peu poussé en raison de la tension de vapeur élevée du constituant C2. Ainsi, dans le cas où C2 est l'argent dont la tension de vapeur à 1300°C est de 135 Pa (1 Torr), on peut opérer avec un vide peu poussé, de l'ordre de $10^{-3}$ Pa. La température utilisée dans cette deuxième étape peut être sensiblement la même ou légèrement supérieure à celle de la première étape. Généralement, on opère à des températures de 1290 à 1350°C.

Après cette deuxième étape, on obtient un joint brasé ne contenant pratiquement plus de constituant C2, mais uniquement une solution solide du constituant C1 et du ou des métaux réfractaires de base qui ont diffusé dans le joint brasé. Dans le cas où l'on utilise des alliages de palladium, la température de fusion du joint finalement obtenu est toujours supérieure à 1552°C, température de fusion du palladium pur, et elle est généralement de l'ordre de 1700°C lorsque le ou les métaux réfractaires ont bien diffusé dans le palladium.

Ainsi, avec les alliages de palladium, l'opération de brasage est réalisée à une température relativement basse, 1290 à 1320°C, ce qui minimise la recristallisation des métaux réfractaires de base des pièces à assembler et préserve ainsi leurs propriétés mécaniques. Par ailleurs, l'alliage de brasage, par exemple l'alliage palladium-argent est ductile, ce qui permet de l'utiliser sous forme de fils ou de feuilles, et du point de vue métallurgique, la microstructure finale du joint brasé est une solution solide, ce qui favorise la ductilité du joint. Les métaux réfractaires de base des pièces à assembler ne sont pas pollués par la diffusion d'un élément provenant de l'alliage de brasage puisque le palladium, l'argent, l'étain et l'indium ne diffusent pas ou très peu dans les métaux réfractaires.

La consommation énergétique d'un brasage effectué selon l'invention, à des températures généralement inférieures à 1320°C, est très inférieure à celle d'un brasage réalisé selon la deuxième technique de l'art antérieur, la différence étant en première approximation d'un facteur 3.

Le brasage de pièces de grandes dimensions est beaucoup plus facile à réaliser avec le procédé de l'invention car il nécessite un four sous vide pouvant aller seulement jusqu'à des températures de 1300 à 1350°C sous vide.

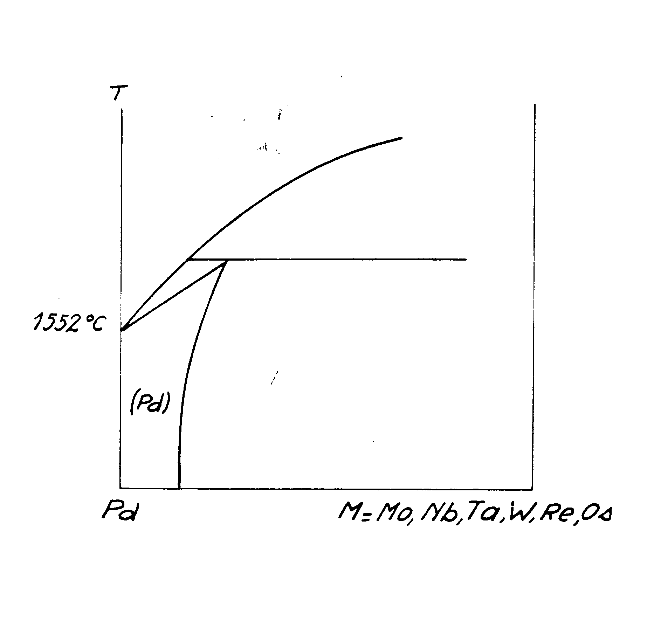

D'autres caractéristiques et avantages de l'invention apparaîtront mieux à la lecture des exemples suivants donnés bien entendu à titre illustratif et non limitatif, en référence à la figure unique annexée.

Cette figure représente l'allure du diagramme de phase à point péritectique des systèmes palladium (Pd)-métaux réfractaires (M) tels que Mo, Ta, Nb, W, Re, Os.

EXEMPLE 1

Dans cet exemple, on réalise l'assemblage d'une plaque de tungstène sur une plaque de molybdène en utilisant comme alliage de brasage, un alliage de palladium contenant 60% en poids d'argent.

On dispose entre les deux plaques à assembler une feuille de cet alliage de palladium et on porte l'ensemble à une température de 1320°C pendant 3 min, sous atmosphère d'argon, ce qui provoque la fusion de l'alliage de palladium.

On met ensuite le four sous un vide de $10^{-5}$ Pa et on maintient l'ensemble à la température de 1320°C pendant 2 min.

Après refroidissement de l'ensemble, on analyse à la microsonde électronique le joint brasé obtenu. On constate qu'il contient de l'ordre de 3% en atomes d'argent, environ 30% en atomes de molybdène, le reste étant du palladium. Il n'y a donc pratiquement pas de tungstène dans le joint obtenu. La température de fusion de ce joint est d'environ 1700°C.

Ainsi, la volatilisation de l'argent et la diffusion du molybdène dans le palladium ont permis d'augmenter la température de fusion du joint d'environ 400°C.

EXEMPLE 2

Cet exemple illustre le brasage d'une plaque de tantale sur une plaque de niobium en utilisant le même alliage de palladium et d'argent que dans l'exemple précédent.

Dans ce cas, on dispose entre les plaques à assembler une feuille de l'alliage palladium-argent, puis on porte l'ensemble à une température de 1320°C sous atmosphère d'argon pendant 3 min.

On met ensuite le four sous vide comme dans l'exemple 1 et on maintient l'ensemble à la température de 1320°C pendant 10 min. On obtient ainsi un joint brasé contenant du niobium et du palladium qui ne contient pratiquement plus d'argent.

Pour vérifier les propriétés mécaniques de ce joint, on porte ensuite les pièces assemblées à une température de 1650°C tout en leur appliquant une contrainte pour tenter de séparer les deux plaques. On constate qu'à cette température le joint brasé ne se rompt pas et qu'il présente ainsi des caractéristiques mécaniques satisfaisantes.

## Revendications

1. Procédé de brasage de deux pièces à base de métaux réfractaires, caractérisé en ce qu'il consiste :

a) - à braser les deux pièces à une température T1, sous une atmosphère de gaz inerte, au moyen d'un alliage fusible à la température T1 et comprenant au moins deux constituants C1 et C2 choisis de façon telle que :

1°)- le constituant C1 a une température de fusion F1 supérieure à T1 mais inférieure à celles des métaux réfractaires de base des pièces à assembler et est capable de s'allier au moins avec un de ces métaux réfractaires, le diagramme de phase du système formé par ce métal réfractaire et le constituant C1 correspondant à une solubilité solide et présentant un point péritectique, et

2°)- le constituant C2 de l'alliage est volatilisable à une température au moins égale à la température T1, et

b) - à soumettre les pièces brasées obtenues dans l'étape a) à un traitement thermique sous vide, à une température au moins égale à T1, pendant une durée telle que l'on obtienne l'évaporation du constituant C2 et la diffusion du métal réfractaire capable de s'allier avec le constituant C1 dans la jonction brasée.

2. Procédé selon la revendication 1, caractérisé en ce que les métaux réfractaires de base sont choisis parmi le molybdène, le tungstène, le tantale, le niobium, le rhénium et l'osmium.

3. Procédé selon la revendication 2, caractérisé en ce que le constituant C1 est le palladium et en ce que le constituant C2 est au moins un métal choisi parmi l'argent, l'étain et l'indium.

4. Procédé selon la revendication 3, caractérisé en ce que l'alliage est un alliage de palladium et d'argent contenant 50 à 70% (en atomes) d'argent.

5. Procédé selon la revendication 3, caractérisé en ce que l'alliage est un alliage palladium-étain choisi parmi les alliages de composition suivante : alliage Pd-Sn à 21,2% en atomes d'étain, alliage Pd-Sn à 30,2% en atomes d'étain et alliage Pd-Sn contenant de 38 à 42% en atomes d'étain.

6. Procédé selon la revendication 3, caractérisé en ce que l'alliage est un alliage palladium-indium choisi parmi les alliages de composition suivante : alliage Pd-In à 31% en atomes d'indium, alliage Pd-In à 38,5% en atomes d'indium et alliage Pd-In contenant 50 à 60% en atomes d'indium.

7. Procédé selon l'une quelconque des revendications 3 à 6, caractérisé en ce que la température T1 est dans la gamme de 1290 à 1320°C.

8. Procédé selon la revendication 7, caractérisé en ce que le traitement thermique est réalisé à une température de 1290 à 1350°C.

## Patentansprüche

1. Verfahren zum Hartlöten von zwei Werkstükken auf der Basis von hochschmelzenden Metallen, dadurch gekennzeichnet, daß es darin besteht:

a) - die beiden Werkstücke bei einer Temperatur T1 unter einer Inertgasatmosphäre mittels einer Legierung hartzulöten, die bei der Temperatur T1 schmelzbar ist und wenigstens zwei Bestandteile C1 und C2 umfaßt, die derart ausgewählt werden, daß:

1°) - der Bestandteil C1 eine Schmelztemperatur besitzt, die höher ist als T1 aber niedriger als diejenigen der hochschmelzenden Basismetalle der zu verbindenden Werkstücke, und in der Lage ist, mit wenigstens einem dieser hochschmelzenden Metalle eine Legierung zu bilden, wobei das Phasendiagramm des aus diesem hochschmelzendem Metall und dem Bestandteil C1 gebildeten Systems einer Löslichkeit im festen Zustand entspricht und einen peritektischen Punkt aufweist, und

2°) - der Bestandteil C2 der Legierung bei einer Temperatur wenigstens gleich der Temperatur T1 verflüchtigbar ist, und

b) - die in dem Verfahrensschritt a) erhaltenen, hartgelöteten Werkstücke einer thermischen Behandlung unter Vakuum bei einer Temperatur wenigstens gleich T1 während einer solchen Dauer zu unterwerfen, daß man die Verdampfung des zweiten Bestandteils C2 und die Diffusion des hochschmelzenden Metalls, das in der Lage ist, eine Legierung mit dem Bestandteil C1 in der Hartlötverbindung zu bilden, erreicht.

2. Verfahren nach Anspruch 1, dadurch gekennzeichnet, daß die hochschmelzenden Basismetalle ausgewählt werden aus: dem Molybdän, dem Wolfram, dem Tantal, dem Niob, dem Rhenium und dem Osmium.

3. Verfahren nach Anspruch 2, dadurch gekennzeichnet, daß der Bestandteil C1 das Palladium ist und daß der Bestandteil C2 wenigstens ein Metall ist, das ausgewählt ist aus dem Silber, dem Zinn und dem Indium.

4. Verfahren nach Anspruch 3, dadurch gekennzeichnet, daß die Legierung eine Legierung aus Palladium und Silber ist, die 50 bis 70% (in Atomen) Silber enthält.

5. Verfahren nach Anspruch 3, dadurch gekennzeichnet, daß die Legierung eine Palladium-Zinn-Legierung ist, die aus den Legierungen folgender Zusammensetzungen ausgewählt ist: Pd-Sn-Legierung mit 21, 2% an Zinnatomen, Pd-Sn-Legierung mit 30,2% an Zinnatomen und Pd-Sn-Legierung mit 38 bis 42% an Zinnatomen.

6. Verfahren nach Anspruch 3, dadurch gekennzeichnet, daß die Legierung eine Palladium-Indium-Legierung ist, die aus den Legierungen folgender Zusammensetzungen ausgewählt ist: Pd-In-Legierung mit 31% an Indiumatomen, Pd-In-Legierung mit 38,5% an Indiumatomen und Pd-In-Legierung mit 50 bis 60% an Indiumatomen.

7. Verfahren nach einem der Ansprüche 3 bis 6, dadurch gekennzeichnet, daß die Temperatur T1 im Bereich von 1290 bis 1320°C liegt.

8. Verfahren nach Anspruch 7, dadurch gekennzeichnet, daß die thermische Behandlung bei einer Temperatur von 1290 bis 1350°C durchgeführt wird.

**Claims**

1. Method for brazing two parts based on refractory metals, characterised in that it consists in:

a) - brazing the two parts at a temperature T1, under an atmosphere of inert gas, by means of an alloy melting at the temperature T1 and comprising at least two constituents C1 and C2 chosen such that:

1°) - the constituent C1 has a melting point F1 greater than T1 but less than those of the refractory base metals of the parts to be assembled and is capable of alloying at least with one of these refractory metals, the phase diagram of the system formed by this refractory metal and the constituent C1 corresponding to a solid solubility and exhibiting a peritectic point, and

2°) - the constituent C2 of the alloy is volatilisable at a temperature not less than the temperature T1, and

b) - subjecting the brazed parts obtained in step a) to a thermal treatment under vacuum, at a temperature not less than T1, for a period of time such that the constituent C2 evaporates and the refractory metal capable of alloying with the constituent C1 in the brazed joint diffuses.

2. Method according to Claim 1, characterised in that the refractory base metals are selected from molybdenum, tungsten, tantalum, niobium, rhenium and osmium.

3. Method according to Claim 2, characterised in that the constituent C1 is palladium and in that the constituent C2 is at least one metal selected from silver, tin and indium.

4. Method according to Claim 3, characterised in that the alloy is a palladium and silver alloy containing 50 to 70 (atomic) % silver.

5. Method according to Claim 3, characterised in that the alloy is a palladium-tin alloy selected from the alloys of following composition: Pd-Sn alloy having 21.2 atomic % tin, Pd-Sn alloy having 30.2 atomic % tin and Pd-Sn alloy containing 38 to 42 atomic % tin.

6. Method according to Claim 3, characterised in that the alloy is a palladium-indium alloy selected from the alloys of following composition: Pd-In alloy having 31 atomic % indium, Pd-In alloy having 38.5 atomic % indium and Pd-In alloy containing 50 to 60 atomic % indium.

7. Method according to any one of Claims 3 to 6, characterised in that the temperature T1 is in the range 1290 to 1320°C .

8. Method according to Claim 7, characterised in that the thermal treatment is carried out at a temperature of 1290 to 1350°C.

T

1552 °C

(Pd)

Pd

M = Mo, Nb, Ta, W, Re, Os